# FASCICULE DE BREVET EUROPEEN

(11) **EP 3 134 961 B1**
(45) Date de publication et mention de la délivrance du brevet: **22.08.2018**
(21) Numéro de dépôt: 15724770.1
(22) Date de dépôt: 21.04.2015
(51) Int. Cl.: H02K 37/14, H01F 7/124, H02K 7/102

(54) **ACTIONNEUR ELECTRIQUE**
ELEKTRISCHER AKTUATOR
ELECTRIC ACTUATOR

(30) Priorité: 25.04.2014 FR 1453759
(43) Date de publication de la demande: 01.03.2017
(73) Titulaire: MMT AG, 6304 Zug (CH)
(72) Inventeur: ANDRIEUX, Gaël, 2533 Evilard (CH); WATRIN, Mathieu, 2300 La Chaux-de-Fonds (CH); KELTZ, Guillaume, 25660 Montfaucon (FR)
(74) Mandataire: reuteler & cie SA
(86) Numéro de dépôt international: PCT/IB2015/052911
(87) Numéro de publication internationale: WO 2015/162557

(56) Documents cités:
- DE-A1- 19 627 925
- FR-A1- 2 701 522
- FR-A1- 2 754 953
- FR-A1- 2 795 885

## Description

La présente invention concerne le domaine des actionneurs électriques et notamment des actionneurs avec un moteur électrique plat.
Des moteurs électriques plats sont décrits par exemple dans les publications de brevets et demandes de brevets US5708406, US8084913, EP1482626 US2010/0314962. Un moteur avec une armature magnétique formant le circuit magnétique où les noyaux de bobines sont rapportés est décrit dans US2009/0001824. Les documents FR2701522 et FR2795885 divulguent des actionneurs électriques selon l'état de la technique. Certains actionneurs électriques sont constitués d'une partie moteur comprenant un rotor et un stator, et d'un train d'engrenage couplé au rotor. Selon le train d'engrenage utilisé l'actionneur peut être réversible ou non. En utilisant un train engrenage avec un bon rendement direct et indirect, l'actionneur présente généralement une bonne réversibilité, ce qui lui permet d'être associé avec un système mécanique de rappel en cas de fonctionnement dégradé (par exemple lors d'une coupure de courant). Ce système de rappel, souvent utilisé dans des systèmes de retour en sécurité, appelé « failsafe » en anglais, est généralement constitué d'un élément de type ressort. L'inconvénient est qu'en utilisation normale, l'actionneur doit en permanence lutter contre le système de rappel, en particulier dans les phases où il doit garder une position fixe ce qui entraine une consommation de courant élevée. En utilisant un engrenage avec un mauvais rendement (par exemple vis sans fin), l'actionneur présente généralement une faible réversibilité ce qui permet de consommer très peu de courant lors des phases où il doit garder une position fixe même si une charge est constamment appliquée. En revanche, les performances dynamiques ne sont pas optimales et il est difficile de lui associer un système mécanique de rappel du fait de la faible réversibilité.
La demande de brevet FR 2 701 522 décrit un moteur comprenant un frein rotor monté à l'intérieur du boitier du moteur. Le frein agit sur le rotor mais constitue un mécanisme indépendant de la partie moteur. Des inconvénients de cette configuration comprennent son encombrement et les coûts de fabrication. La disposition du frein aligné sur l'axe du rotor avec le moteur ne permet pas de réaliser un moteur à faible hauteur.

Un objet de l'invention est de fournir un actionneur électrique compact et économique à fabriquer pouvant être mis en association avec un système de rappel en position de sécurité (« failsafe ») avec un bon rendement et de bonnes performances dynamiques.

Il est avantageux de fournir un actionneur électrique ayant une faible consommation de courant.

Il est avantageux, pour certaines applications, de fournir un actionneur électrique ayant une bonne réversibilité.

Il est avantageux de fournir un actionneur électrique performant et fiable.

Pour certaines applications il est avantageux de fournir un actionneur électrique ayant un faible longueur dans la direction de l'axe du rotor.

Dans la présente invention, on décrit un moteur électrique comprenant un rotor comprenant une partie aimantée définissant une pluralité de pôles de rotor, un stator comprenant une pluralité de bobines et une armature magnétique définissant un circuit magnétique, et un dispositif frein rotor. Le dispositif frein rotor comprend un élément mobile et un stator de frein comprenant une armature magnétique de frein et une bobine d'activation de frein supportée par l'armature magnétique de frein, la bobine d'activation de frein étant configurée pour actionner un déplacement de l'élément mobile d'une position désengagée où le rotor est libre de tourner à une position engagée où le rotor est maintenu dans une position statique bloquée en rotation. L'armature magnétique de frein est solidaire et au moins en partie formée avec l'armature magnétique du stator.

Selon une forme d'exécution, l'élément mobile comprend une partie de frein avec une surface dentée ou rugueuse configurée pour engager une périphérie circonférentielle du rotor comprenant une surface dentée ou rugueuse complémentaire.

Selon une forme d'exécution, le dispositif frein rotor est sous forme d'un actionneur linéaire, l'élément mobile effectuant un mouvement linaire selon un axe de déplacement orthogonale à l'axe du rotor.

Selon une forme d'exécution, le pilotage de l'élément mobile, en cas de coupure de courant au moteur, est effectué par une réserve d'énergie, tel qu'un condensateur ou une pile disposé dans ou connecté au moteur.

Selon une forme d'exécution, l'élément mobile est couplé au stator de frein de manière bistable, configuré pour que dans les positions de blocage, respectivement de déblocage, l'élément mobile soit dans une position stable.

Le couplage bistable peut être effectué au moyen d'un aimant statorique monté dans le stator de frein, et d'une partie magnétique de l'élément mobile, les parties aimantées de l'aimant statorique et de l'élément mobile étant configurées pour générer une force magnétique poussant l'élément mobile vers le rotor dans la position de freinage, et dans le sens opposé dans la position de déblocage.

Selon une forme d'exécution, l'armature magnétique du stator comprend une forme généralement plate, un plan majeur de la forme plate orienté essentiellement perpendiculaire à l'axe de rotation du rotor.

Selon une forme d'exécution, l'armature magnétique du stator constitue un circuit magnétique fermé entourant les bobines et le rotor ainsi que le dispositif de frein.

Dans la présente invention, on décrit aussi un actionneur comprenant un moteur électrique selon l'invention, une transmission sous forme d'un train d'engrenages couplé à une sortie du rotor du moteur, un circuit électronique, et un boitier dans lequel le moteur, la transmission et le circuit sont logés.

Selon une forme d'exécution, le rotor et la transmission sont réversibles et en position de déblocage permettent un système de rappel de tourner l'axe de sortie du rotor et la transmission dans une position définie à l'avance par un système de mise en sécurité (« failsafe »).

D'autres buts et aspects avantageux de l'invention apparaitront à la lecture de la description détaillée de formes d'exécution ci-après et des dessins, dans lesquels :

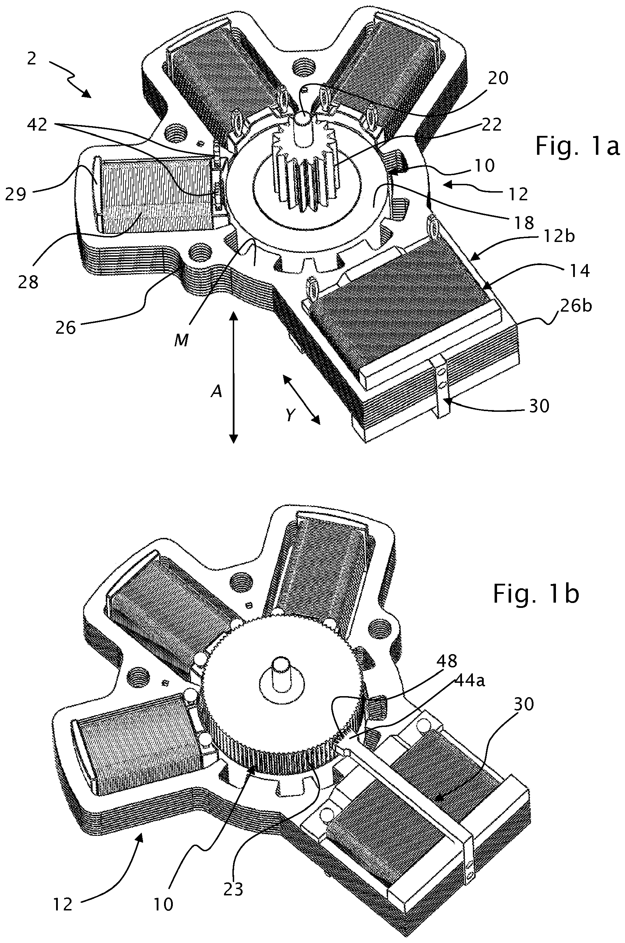

Les Fig. 1a et 1b sont des vues en perspective, respectivement orientées vers le dessus et le dessous, d'une forme d'exécution d'un moteur électrique (illustré sans boîtier) selon l'invention ;

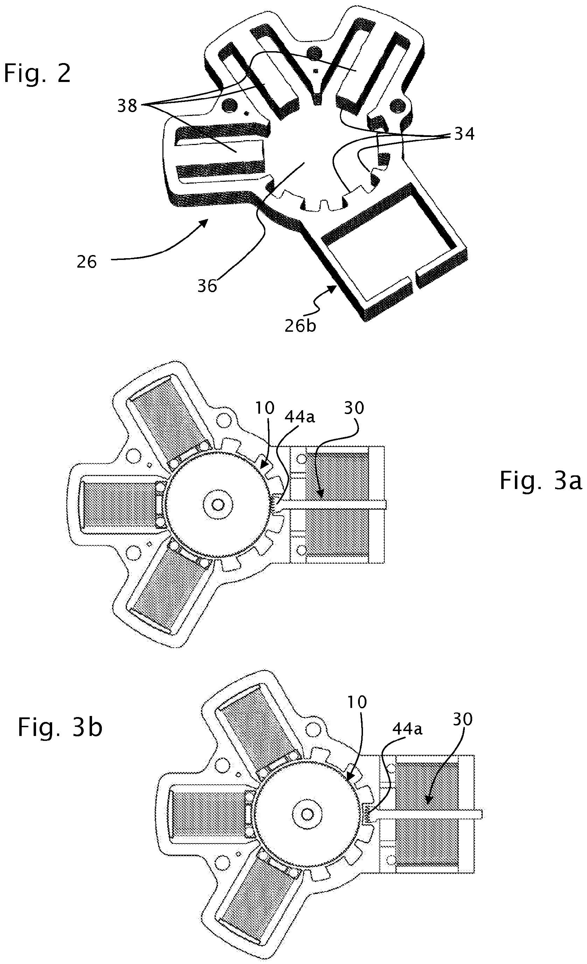

La Fig. 2 est une vue en perspective d'une armature du stator d'une forme d'exécution d'un moteur électrique selon l'invention ;
Les Fig. 3a et 3b sont des vues de la forme d'exécution selon la figure 1b illustrant le rotor en position libre (Fig. 3b) et en position bloquée (Fig. 3a) ;
Les Fig. 4a et 4b sont des vues en coupe de la forme d'exécution selon la figure 1b illustrant le rotor en position libre (Fig. 4b) et en position bloquée (Fig. 4a) ;
La Fig. 5a est une vue en perspective d'un actionneur électrique, sans couvercle, incorporant un moteur électrique selon une forme d'exécution de l'invention ;
La Fig. 5b est une vue en perspective et en coupe de l'actionneur de la figure 5a ;
La Fig. 6 est une vue d'une forme d'exécution d'un moteur électrique (illustré sans boîtier) selon l'invention, avec un dispositif de frein monostable ;
La Fig. 7 est une vue en perspective d'une forme d'exécution d'un actionneur avec un organe de sortie linéaire et un moteur électrique (illustré sans boîtier, sans bobines et sans circuit) selon l'invention.

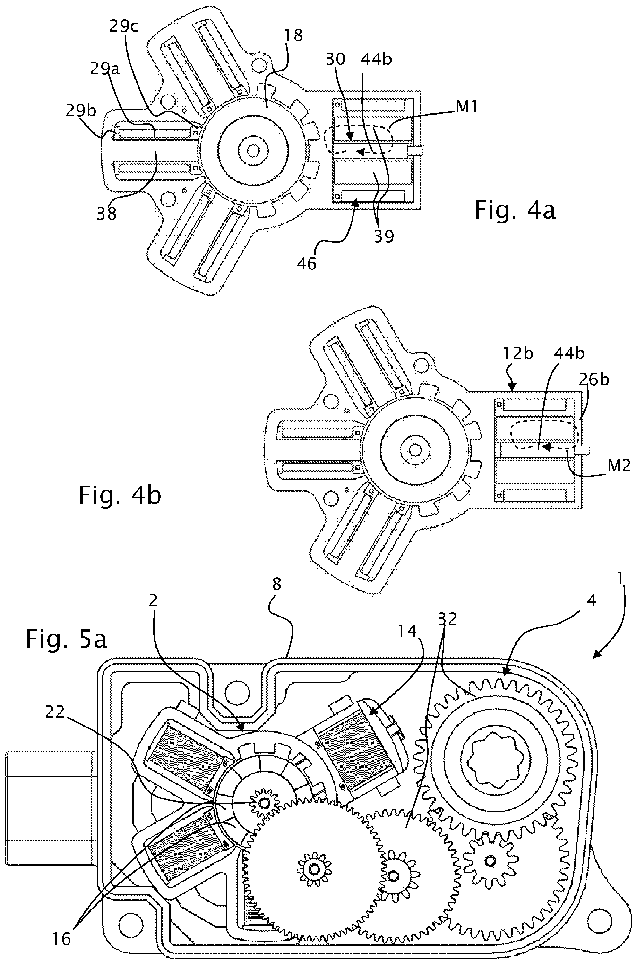

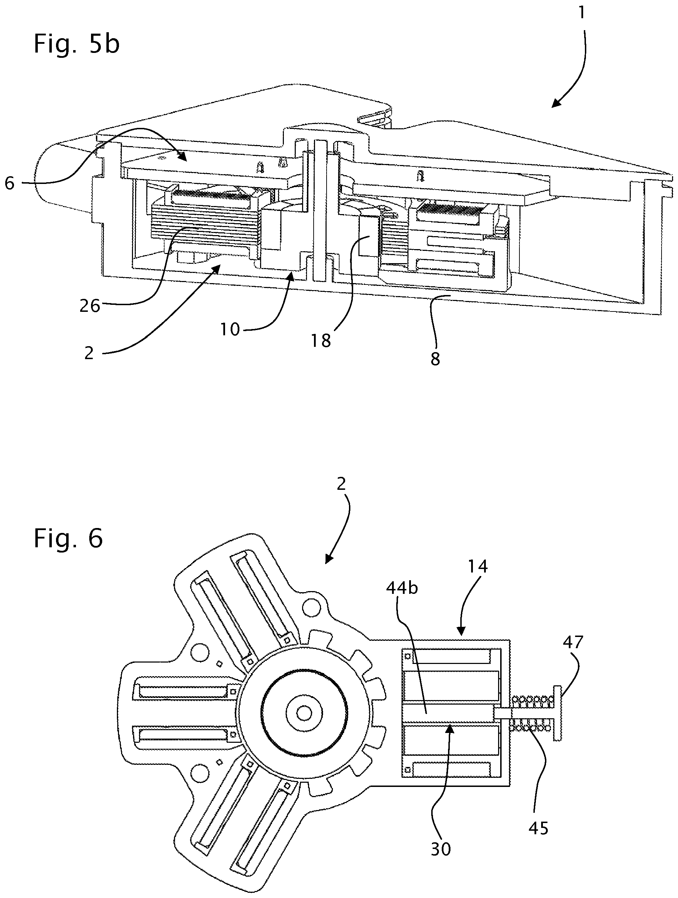

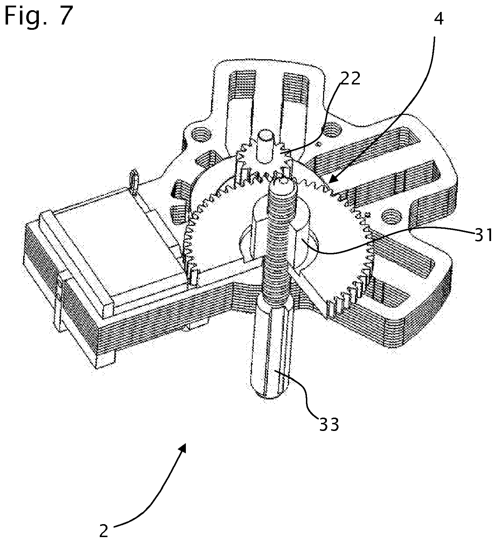

Faisant référence aux figures, en commençant par la figure 5, un actionneur électrique 1 comprend un moteur électrique 2, une transmission 4 sous forme d'un train d'engrenages, un circuit de commande 6, et un boitier 8 dans lequel le moteur, la transmission et le circuit sont logés. Le train d'engrenages peut par exemple former un réducteur, les roues d'engrenages 32 du train d'engrenage étant couplés à un pignon de sortie 22 du rotor. L'organe de sortie de l'actionneur peut-être rotative ou linéaire. Un exemple de forme d'exécution à sortie linéaire est illustré dans la figure 7. La transmission dans cet exemple comprend un pignon de sortie 22 du rotor engageant une roue comprenant un écrou 31 engageant une vis à déplacement linéaire 33.

Le moteur électrique 2, selon différentes formes d'exécution de l'invention, comprend un rotor 10, un stator de moteur 12 comprenant des bobines 28 et une armature magnétique 26 en un matériau magnétique, et un dispositif frein rotor 14. Par matériau magnétique on entend un matériau ayant une grande perméabilité magnétique tel qu'un fer doux, une ferrite, ou d'autres matériaux utilisés pour les circuits magnétiques des moteurs ou transducteurs électromagnétiques.

Le rotor comprend une partie aimantée 18 définissant une pluralité de pôles 16 de rotor. Le rotor tourne autour d'un axe définissant une direction axiale A.

La partie aimantée du rotor peut comporter un aimant axial couplé à un corps en un matériau magnétique comprenant des dents formant les pôles.

Dans une variante, la partie aimantée du rotor peut être sous forme d'un aimant bague avec des secteurs circonférentielles aimantés de manière alternée Nord/Sud, ou encore d'une bague sur laquelle des aimants sont rapportés, par exemple des aimants en NdFeB frittés, compressés ou injectés.

Le stator comprend une pluralité de pôles de stator 34 qui peut être de nombre égal ou différent du nombre de pôles du rotor. L'armature magnétique 26 du stator peut avantageusement avoir une forme généralement plate, le plan majeur M de la forme plate orienté essentiellement perpendiculaire à l'axe de rotation A. La périphérie de la forme plate peut constituer un circuit magnétique fermé entourant les bobines et la partie aimantée du rotor.

Dans une forme d'exécution avantageuse, l'armature magnétique peut avantageusement être fabriquée de tôles estampées.

Le stator comprend des dents 34 distribuées circonférentiellement autour du rotor 10 et séparés de la surface du rotor par un entrefer. Les dents définissent les pôles magnétiques 34 du stator. Certaines dents sont couplées directement aux bobines, et d'autres sont couplés indirectement par le circuit magnétique formé par l'armature magnétique 26.

Chaque bobine 28 comprend un support de bobine 29, par exemple en un matériau diélectrique tel que du plastique moulé ou injecté, avec une partie centrale creuse 29a bordée d'un premier flasque 29b à une extrémité et un deuxième flasque 29c à l'autre extrémité. Un fil conducteur (en cuivre ou un autre matériau conducteur) est bobiné sur la partie centrale creuse entre les flasques et connecté à ses extrémités à des bornes électriques 42, par exemple sous forme de pins, assemblés au support de bobine, par exemple par surmoulage dans l'un des flasques. Les flasques 29b, 29c du support de bobine 29 peuvent avantageusement aussi servir de guidage, positionnement et/ou de fixation de la bobine 28 sur l'armature magnétique 26. Dans les formes d'exécution illustrées, la bobine est insérée axialement dans l'orifice central 36 de l'armature magnétique 26 et ensuite insérée radialement sur un noyau de bobine 38 formé solidairement et intégralement avec l'armature 26.

Dans une variante (non-illustrée) le noyau de bobine 38 peut être sous forme d'une pièce rapportée en un matériau magnétique, inséré dans la partie centrale creuse 29a du support de bobine. Le noyau de bobine 38 comprend dans ce cas une partie de fixation configurée pour être ancrée à l'armature 26, par exemple par soudage, par rivetage, par chassage ou par d'autres moyens mécaniques pour établir une connexion magnétique et une fixation mécanique avec l'armature. La provision du noyau de bobine en tant que pièce rapportée permet avantageusement d'insérer le noyau de bobine dans la bobine 10 avant l'assemblage de la bobine dans l'armature 26 dans une direction axiale A. Cela permet d'avoir une bobine de plus grande dimension (circonférence / diamètre / hauteur / largueur) que dans une configuration où la bobine devrait être enfilée sur un noyau intégralement formé avec l'armature magnétique. Le noyau de bobine 38 peut être formé du même matériau et par le même procédé de fabrication que ceux utilisés pour l'armature, par exemple par estampage de tôles. Dans ce dernier exemple, le noyau peut même être formé et découpé de la pièce de tôle formant l'armature, cela permettant de réduire les chutes de matériau et les coûts de l'outillage.

Dans la variante de noyau de bobine rapporté, le noyau de bobine peut aussi être formé d'un matériau différent ou par un procédé de fabrication différent que ceux utilisés pour l'armature magnétique.

Dans les formes d'exécution illustrées, des dents 34 sont avantageusement formées solidairement et intégralement avec les tôles estampées de l'armature magnétique 26.

Le dispositif frein rotor 14 comprend un élément mobile 30 et un stator de frein. Le stator de frein comprend une armature magnétique de frein 26b et une bobine d'activation de frein 46 supportée par l'armature magnétique de frein 26b. La bobine d'activation de frein 46 est configurée pour actionner un déplacement de l'élément mobile d'une position désengagée à une position engagée et vice versa. Dans la position engagée l'élément mobile engage le rotor pour le maintenir dans une position statique bloquée en rotation, et dans la position désengagée le rotor est libre de tourner. L'élément mobile peut avoir une partie de frein 44a avec une surface dentée ou rugueuse. La périphérie du rotor contre laquelle la partie de frein s'engage peut aussi avoir une surface dentée 23 complémentaire, ou une surface rugueuse. Dans une variante, la partie de frein peut aussi comporter une matière avec un coefficient de frottement relatif à la périphérie du rotor suffisant pour arrêter la rotation du rotor dans une position de blocage.

Dans une forme d'exécution préférée le dispositif frein rotor 14 est sous forme d'un actionneur linéaire, l'élément mobile effectuant un mouvement lineaire selon un axe de déplacement Y orthogonale à la l'axe A du rotor. Il est toutefois possible dans le cadre de l'invention d'avoir un élément mobile avec un mouvement non-linéaire, par exemple un élément mobile pivotant autour d'un axe.

Le dispositif frein rotor 14 permet donc de bloquer et débloquer le rotor, ce qui permet au moteur d'être associé à une transmission, notamment un train d'engrenages, ayant un bon rendement et donc une bonne réversibilité. En position bloquée, le système peut être configuré pour maintenir une position statique sans consommer de courant. En position débloquée, le système devient réversible et le rotor et la transmission peuvent donc être bougés par un système de rappel en sécurité (dit « failsafe »).

Dans une forme d'exécution préférée, le blocage/déblocage peut être réalisé électroniquement.

Dans une forme d'exécution préférée, l'élément mobile 30 est couplé au stator de frein 26b de manière bistable. Dans les positions de blocage, respectivement de déblocage, l'élément mobile 30 est dans une position stable, ce qui permet d'avoir un fonctionnement à très faible consommation d'énergie. En cas de coupure de courant ou de fonctionnement dégradé de l'actionneur, le pilotage de l'élément mobile 30 peut être effectué grâce à une réserve d'énergie, par exemple au moyen d'un condensateur ou d'une pile dans l'actionneur.

Dans une forme d'exécution, le couplage bistable est effectué au moyen d'un aimant statorique 39 monté dans le stator de frein 12b, et de la partie de corps d'actionnement 44b de l'élément mobile 30, la partie de corps d'actionnement en matériau magnétique. Les zones aimantées de l'aimant statorique sont configurées pour générer une force magnétique poussant l'élément mobile vers le rotor dans la position de freinage, et dans le sens opposé dans la position de déblocage. Cela est effectué par la fermeture du circuit magnétique M1, M2 (voir figures 4a, 4b) lorsque la partie de corps d'actionnement 44b est en butée contre l'armature magnétique de frein 26b dans ces deux positions bistables. Dans le cadre de l'invention, le couplage bistable peut aussi être effectué par d'autres moyens, tel que par un système comprenant une came sur l'élément mobile engageant un suiveur de came sur ressort monté sur la partie statorique.

Dans une autre forme d'exécution, l'élément mobile 30 est couplé au stator de frein 12b de manière monostable. La figure 6 illustre un exemple d'une variante monostable. Dans la position de blocage, l'élément mobile 30 est dans une position stable poussée par un ressort, ce qui permet d'avoir un fonctionnement à très faible consommation d'énergie. Dans la position de déblocage, l'élément mobile est actionné par la bobine d'activation de frein contre la force du ressort afin de permettre au rotor de tourner. En cas de coupure de courant ou de fonctionnement dégradé de l'actionneur, le pilotage de l'élément mobile 30 peut être effectué grâce à une réserve d'énergie, par exemple au moyen d'un condensateur ou d'une pile dans l'actionneur.

Selon une variante, dans la position de blocage, l'élément mobile 30 n'est pas dans une position stable, le ressort 45 tendant à le ramener en position débloquée. La position bloquée nécessite donc du courant pour être maintenu. Dans certains cas ce courant peut être jugé suffisamment faible pour être acceptable et cela permet de se passer de la réserve d'énergie (condensateur ou pile).

L'armature magnétique de frein 26b du stator de frein peut avantageusement être solidaire et intégralement formé avec l'armature magnétique 26. La bobine d'activation de frein 46 peut comprendre une bobine supportée par l'armature magnétique de frein 26b. L'avantage de ce système est l'intégration du dispositif frein rotor 14 dans le stator du moteur rotatif. Le paquet de tôles étant commun au moteur rotatif et au dispositif frein rotor 14, cela permet un gain de coût, de place et de tolérance lors de l'assemblage.

En mode de fonctionnement normal, l'actionneur linéaire 14 pilote l'élément mobile 30 afin de débloquer le rotor 10 quand l'axe de sortie 22 a besoin d'être piloté électriquement vers une position. En mode de fonctionnement normal, l'actionneur linéaire 14 pilote l'élément mobile 30 afin de bloquer le rotor 10 quand l'axe de sortie 22 a besoin d'être maintenu à une position fixe, permettant alors de baisser la consommation électrique de l'actionneur 1. En mode dégradé, par exemple lors d'une coupure de courant aux bornes de l'actionneur électrique 1, l'actionneur linéaire 14 pilote l'élément mobile 30 afin de débloquer le rotor 10 et rendre l'actionneur réversible permettant alors à un système de rappel de tourner l'axe de sortie 22 dans une position définie à l'avance.

Ce système permet de commander le blocage du rotor en y associant un engrenage avec un bon rendement et un stator avec un faible couple à l'arrêt. Lorsque le rotor est débloqué, cela permet de maximiser les performances dynamiques et d'avoir un faible couple à l'arrêt pour être actionné par un système de rappel. Lorsque le rotor est bloqué, cela permet d'avoir un couple de maintien important sans consommer de courant.

L'avantage supplémentaire de ce système est d'intégrer la fonction de la partie stator du moteur et du frein rotor sur un seul paquet de tôles pour améliorer les coûts, la compacité et les tolérances.

### Liste des références dans les figures

### Actionneur électrique 1

Moteur électrique 2
   Rotor 10
      Pôles 16
      Partie aimantée 18
      Axe 20
      Pignon de sortie 22
      Surface d'engagement 23
         →surface dentée
   Stator de moteur 12
      Pôles
         Armature magnétique 26
            Dents 34
            Orifice central 36
            Noyau de bobine 38
         Bobine 28
            Support de bobine 29
               Partie centrale creuse 29a
               Premier flasque 29b
               Deuxième flasque 29c
            Fil conducteur 40
            Bornes électriques 42
   Dispositif frein rotor 14
      Elément mobile 30
         Partie de frein 44a
            Extrémité d'appui 48
               →extrémité dentée
         Partie de corps d'actionnement 44b
            →tige en matériau magnétique
         Flasque (variante monostable) 47
         Ressort (variante monostable) 45
   Stator de frein 12b
      Armature magnétique de frein 26b
      Electroaimant (bobine) 46
         Support de bobine
         Fil conducteur
      Aimant statorique 39
   Transmission 4
      Train d'engrenages
         Roues d'engrenages 32
         Ecrou 31
   Organe de sortie 33
      rotative
      linéaire
Circuit électronique 6 →circuit électronique de commande
Boîtier 8
   Direction axiale *A*
   Plan majeur du stator *M*

## Revendications

1. Moteur électrique comprenant un rotor (10) comprenant une partie aimantée (18), un stator de moteur (12), et un dispositif frein rotor (14), le dispositif frein rotor comprenant un élément mobile (30) et un stator de frein comprenant une armature magnétique de frein (26b) et une bobine d'activation de frein (46) supportée par l'armature magnétique de frein, la bobine d'activation de frein étant configurée pour actionner un déplacement de l'élément mobile d'une position désengagée où le rotor est libre de tourner à une position engagée où le rotor est maintenu dans une position statique bloquée en rotation, **caractérisé en ce que** le stator de moteur (12) comprend au moins une bobine (28) et une armature magnétique (26) définissant un circuit magnétique et **en ce que** l'armature magnétique de frein (26b) du stator de frein est solidaire et au moins partiellement formée avec l'armature magnétique (26) du stator de moteur (12).

2. Moteur électrique selon la revendication précédente, **caractérisé en ce que** l'élément mobile comprend une partie de frein (44a) avec une surface dentée ou rugueuse configurée pour engager une périphérie circonférentielle du rotor comprenant une surface dentée ou rugueuse complémentaire.

3. Moteur électrique selon l'une des revendications précédentes, **caractérisé en ce que** le dispositif frein rotor est sous forme d'un actionneur linéaire, l'élément mobile effectuant un mouvement linaire selon un axe de déplacement (Y) orthogonale à l'axe (A) du rotor.

4. Moteur électrique selon l'une des revendications précédentes, **caractérisé en ce que** le pilotage de l'élément mobile en cas de coupure de courant au moteur est effectué par une réserve d'énergie, tel qu'un condensateur ou une pile disposé dans ou connecté au moteur.

5. Moteur électrique selon l'une des revendications précédentes, **caractérisé en ce que** l'élément mobile est couplé au stator de frein de manière bistable, configuré pour que dans les positions de blocage, respectivement de déblocage, l'élément mobile est dans une position stable.

6. Moteur électrique selon la revendication précédente, **caractérisé en ce que** le couplage bistable est effectué au moyen d'un aimant statorique (39) monté dans le stator de frein, et d'une partie en matériau magnétique de l'élément mobile, l'aimant statorique et le matériau magnétique de l'élément mobile étant configurées pour générer une force magnétique poussant l'élément mobile vers le rotor dans la position de freinage, et dans le sens opposé dans la position de déblocage.

7. Moteur électrique selon l'une des revendications précédentes, **caractérisé en ce que** l'armature magnétique du stator comprend une forme généralement plate, un plan majeur de la forme plate orienté essentiellement perpendiculaire à l'axe de rotation (A) du rotor.

8. Moteur électrique selon l'une des revendications précédentes, **caractérisé en ce que** l'armature magnétique du stator constitue un circuit magnétique fermé entourant les bobines et le rotor ainsi que le dispositif de frein.

9. Actionneur comprenant un moteur électrique selon l'une des revendications précédentes, une transmission (4) couplée à une sortie (22) du rotor du moteur, un circuit électronique (6), et un boitier (8) dans lequel le moteur, la transmission et le circuit sont logés.

10. Actionneur selon la revendication précédente, **caractérisé en ce que** la transmission est sous forme d'un train d'engrenages.

11. Actionneur selon la revendication 10, **caractérisé en ce que** la transmission comprend un dispositif vis-écrou (31, 33), la vis (33) étant à déplacement linéaire.

12. Actionneur selon l'une des trois revendications précédentes, **caractérisé en ce que** le rotor et la transmission sont réversibles et en position de déblocage permettent un système de rappel de tourner l'axe de sortie (22) du rotor et la transmission dans une position définie à l'avance par un système de mise en sécurité.

## Patentansprüche

1. Elektromotor, umfassend einen Rotor (10), umfassend einen Magnetteil (18), einen Motorstator (12) und eine Rotorbremsvorrichtung (14), wobei die Rotorbremsvorrichtung ein bewegliches Element (30) und einen Bremsenstator umfasst, umfassend einen magnetischen Bremsenanker (26b) und eine Bremsenaktivierungsspule (46), die von dem magnetischen Bremsenanker getragen wird, wobei die Bremsenaktivierungsspule konfiguriert ist, um eine Verlagerung des beweglichen Elements von einer gelösten Position, in welcher der Rotor frei drehbar ist, in eine Eingriffposition, in welcher der Rotor in einer statischen Position gehalten wird, in welcher die Rotation blockiert ist, zu veranlassen,
**dadurch gekennzeichnet, dass** der Motorstator (12) mindestens eine Spule (28) und einen Magnetanker (26) umfasst, die einen Magnetkreis definieren und dass der magnetische Bremsenanker (26b) des Bremsenstators mit dem Magnetanker (26) des Motorstators (12) fest verbunden und mindestens teilweise ausgebildet ist.

2. Elektromotor nach vorangehendem Anspruch, **dadurch gekennzeichnet, dass** das bewegliche Element einen Bremsenteil (44a) mit einer gezahnten oder rauen Oberfläche umfasst, die konfiguriert ist, um in eine Umfangsperipherie des Rotors einzugreifen, die eine komplementäre gezahnte oder raue Oberfläche umfasst.

3. Elektromotor nach einem der vorangehenden Ansprüche, **dadurch gekennzeichnet, dass** die Rotorbremsvorrichtung in Form eines linearen Aktuators vorliegt, wobei das bewegliche Element eine lineare Bewegung gemäß einer zur Achse (A) des Rotors orthogonalen Verlagerungsachse (Y) durchführt.

4. Elektromotor nach einem der vorangehenden Ansprüche, **dadurch gekennzeichnet, dass** die Steuerung des beweglichen Elements bei einer Unterbrechung des Motorstroms von einer Energiereserve wie ein Kondensator oder eine Batterie durchgeführt wird, angeordnet im oder verbunden mit dem Motor.

5. Elektromotor nach einem der vorangehenden Ansprüche, **dadurch gekennzeichnet, dass** das bewegliche Element mit dem Bremsenstator bistabil gekoppelt ist, konfiguriert, damit das bewegliche Element in der blockierten beziehungsweise gelösten Position in einer stabilen Position ist.

6. Elektromotor nach vorangehendem Anspruch, **dadurch gekennzeichnet, dass** die bistabile Kopplung mit Hilfe eines Statormagneten (39), der im Bremsenstator montiert ist, und einem Teil aus magnetischem Material des beweglichen Elements durchgeführt wird, wobei der Statormagnet und das magnetische Material des beweglichen Elements konfiguriert sind, um eine Magnetkraft zu erzeugen, die das bewegliche Element in der Bremsposition zum Rotor und in der gelösten Position in die entgegengesetzte Richtung drückt.

7. Elektromotor nach einem der vorangehenden Ansprüche, **dadurch gekennzeichnet, dass** der Magnetanker des Stators eine allgemein flache Form umfasst, wobei eine Hauptebene der platten Form im Wesentlichen senkrecht zur Rotationsachse (A) des Rotors ausgerichtet ist.

8. Elektromotor nach einem der vorangehenden Ansprüche, **dadurch gekennzeichnet, dass** der Magnetanker des Stators einen geschlossenen Magnetkreis bildet, der die Spulen und den Rotor sowie die Bremsvorrichtung umgibt.

9. Aktuator, umfassend einen Elektromotor nach einem der vorangehenden Ansprüche, eine Übertragung (4), die an einen Ausgang (22) des Rotors des Motors gekoppelt ist, einen elektronischen Schaltkreis (6) und ein Gehäuse (8), in welchem der Motor, die Übertragung und der Schaltkreis untergebracht sind.

10. Aktuator nach vorangehendem Anspruch, **dadurch gekennzeichnet, dass** die Übertragung in Form eines Getriebezugs vorliegt.

11. Aktuator nach Anspruch 10, **dadurch gekennzeichnet, dass** die Übertragung eine Schraube-Mutter-Vorrichtung (31, 33) umfasst, wobei sich die Schraube (33) linear verlagert.

12. Aktuator nach einem der drei vorangehenden Ansprüche, **dadurch gekennzeichnet, dass** der Rotor und die Übertagung reversibel sind und in gelöster Position einem Rückholsystem erlauben, die Ausgangsachse (22) des Rotors und die Übertragung in eine zuvor von einem Sicherungssystem definierte Position zu drehen.

## Claims

1. Electric motor comprising a rotor (10) comprising a magnetized portion (18), a motor stator (12)and a rotor braking device (14), the rotor braking device comprising a mobile element (30) and a brake stator comprising a magnetic brake armature (26b) and a brake activation coil (46) supported by the magnetic brake armature, the brake activation coil being configured to actuate a movement of the mobile element from a disengaged position where the rotor is free to rotate to an engaged position where the rotor is held in a static position, blocked in rotation,
**characterized in that** the motor stator (12) comprises at least one coil (28) and a magnetic armature (26) defining a magnetic circuit and **in that** the magnetic brake armature (26b) of the brake stator is integral with and at least partially formed with the magnetic armature (26) of the motor stator (12) .

2. The electric motor according to the preceding claim, **characterized in** the mobile element comprises a brake portion (44a) with a toothed or rough surface configured to engage a circumferential perimeter of the rotor comprising a complementary toothed or rough surface.

3. The electric motor according to any one of the preceding claims, **characterized in that** the rotor brake device is in the form of a linear actuator, the mobile element performing a linear movement according to a movement axis (Y) orthogonal to the axis (A) of the rotor.

4. The electric motor according to any one of the preceding claims, **characterized in that** the control of the mobile element in case of a current interruption to the motor is carried out by an energy reserve such as a capacitor or a battery disposed in or connected to the motor.

5. The electric motor according to any one of the preceding claims, **characterized in that** the mobile element is coupled to the brake stator in a bi-stable manner, configured so that in the blocking positions, respectively deblocking positions, the mobile element is in a stable position.

6. The electric motor according to the preceding claim, **characterized in that** the bi-stable coupling is carried out by means of a stator magnet (39) mounted in the brake stator, and a portion made of magnetic material of the mobile element, the stator magnet and the magnetic material of the mobile element being configured to generate a magnetic force pushing the mobile element toward the rotor in the braking position, and in the opposite direction in the deblocking position.

7. The electric motor according to any one of the preceding claims, **characterized in that** the magnetic armature of the stator comprises a generally flat shape, a major plane of the flat shape oriented essentially perpendicular to the rotation axis (A) of the rotor.

8. The electric motor according to any one of the preceding claims, **characterized in that** the magnetic armature of the stator constitutes a closed magnetic circuit surrounding the coils and the rotor as well as the braking device.

9. An actuator comprising an electric motor according to any one of the preceding claims, a transmission (4) coupled to an output (22) of the motor rotor, an electronic circuit (6), and a housing (8) in which the motor, the transmission and the circuit are housed.

10. The actuator according to the preceding claim, **characterized in that** the transmission is in the form of a gear train.

11. The actuator according to claim 10, **characterized in that** the transmission comprises a screw-nut device (31, 33), the screw (33) having linear motion.

12. The actuator according to any one of the three preceding claims, **characterized in that** the rotor and the transmission are reversible and, in the deblocking position, allow a return system to rotate the output axis (22) of the rotor and the transmission to a position defined in advance by a safety system.
